# FASCICULE DE BREVET EUROPEEN

(11) **EP 2 287 412 B1**
(45) Date de publication et mention de la délivrance du brevet: **12.04.2017**
(21) Numéro de dépôt: 10171519.1
(22) Date de dépôt: 30.07.2010
(51) Int. Cl.: E03F 5/16

(54) **Dispositif d'extinction rapide et naturelle pour fosses d'extinction et bacs de rétention anti-feu d'huile inflammable, notamment de transformateurs électriques**
Vorrichtung zum schnellen und umweltschonenden Löschen für Auffanggruben entzündlcher Öle, insbesondere für elektrische Trnsformatoren
Device for rapid and natural extinction for a retention pit for polluting inflammable oil, especially for electric transformers

(30) Priorité: 30.07.2009 FR 0955356
(43) Date de publication de la demande: 23.02.2011
(73) Titulaire: GMT, 84000 Avignon (FR)
(72) Inventeur: Machou, Yves, 30400, Villeneuve-lès-Avignon (FR)
(74) Mandataire: Decobert, Jean-Pascal

(56) Documents cités:
- WO-A1-2009/016203
- WO-A2-2006/084100
- AU-A4- 2002 100 386
- CH-A5- 683 396
- FR-A1- 2 743 790

## Description

### DOMAINE DE L'INVENTION

La présente invention concerne un dispositif de sécurité environnementale pour fosse ou bac de rétention d'huile polluante, destiné notamment aux équipements pour réseaux de distribution de l'électricité et en particulier aux fosses ou bac de rétention d'huile pour transformateurs électriques.

### ARRIERE PLAN DE L'INVENTION

Il est bien connu que les transformateurs électriques, servant essentiellement à modifier la tension d'un courant, produisent une grande quantité de chaleur qui doit être dissipée. Le refroidissement de ces transformateurs est assuré en immergeant les noyaux et les enroulements des transformateurs dans un fluide caloporteur et isolant électrique. Ce fluide consiste dans un diélectrique tel que les huiles minérales ou les PolyChloroBiphényles (PCB).

Compte tenu du caractère hautement toxique des PCB, les PCB étant des polluants ubiquitaires, bioaccumulables et persistants dont la toxicité varie selon leur poids moléculaire (selon le nombre d'atomes de chlore) et la configuration spatiale de leurs molécules, les transformateurs de puissance utilisés dans les réseaux électriques sont généralement installés au-dessus d'une fosse de rétention destinée à recueillir l'huile contenue dans ces appareils lorsqu'une fuite se produit.

Usuellement, les fosses disposées sous les transformateurs électriques sont remplies de galets.

Par ailleurs, il est préconisé de ne pas installer un transformateur dans un endroit exposé à des conditions telles que circulation routière, atmosphère corrosive ou chaleur élevée. De plus, sur le plancher autour du transformateur il ne doit pas y avoir d'avaloir pour éviter qu'une éventuelle fuite de fluide se transforme, par le réseau d'égouts, en rejet dans le milieu naturel.

De telles fosses remplies de galets ne permettent pas d'assurer une sécurité suffisante en cas d'inflammation des huiles, le feu pouvant alors se propager et causer des dégâts importants.

Afin de remédier à cet inconvénient, on a déjà proposé qu'un bac ou une fosse soit placé sous le transformateur pour recueillir les fuites liquides typiquement, à base d'hydrocarbures pouvant s'écouler du transformateur, le capot de protection qui le recouvre comprenant quant à lui, typiquement, des lamelles rapprochées, pentues, réservant entre elles un espace assurant au produit coulant un accès à bac.

Un tel système d'extinction pour bac ou fosse de rétention d'huile polluante a été mis au point et commercialisé par la société demanderesse, la société GMT, depuis 1996, sous la référence BAF ou IC.

Ce type de système est constitué d'un capot comprenant des lamelles rapprochées, pentues réservant entre elles un espace assurant auxdits produits coulants un accès au bac ou à la fosse tout en évitant une alimentation suffisante en oxygène pour permettre d'entretenir une combustion des huiles si ces dernières devaient prendre feu. Chaque lamelle est réalisée en tôle pliée de manière à former un profilé comprenant une partie supérieure bordée sur ses côtés longitudinaux de deux éléments sensiblement verticaux de hauteurs différentes pour créer l'inclinaison de la lamelle. Lesdits éléments verticaux sont repliés dans leur partie inférieure dans une même direction pour former des pattes d'appui globalement horizontales, la patte d'appui de l'élément vertical le plus haut prenant appui sur la patte d'appui de l'élément vertical le plus bas.

Afin d'améliorer la sécurité, on a également proposé un dispositif d'extinction pour bac ou fosse de rétention d'huile polluante dont l'écoulement de l'huile est plus rapide. C'est le cas par exemple de la demande de brevet international WO2009/016203 déposée par la Demanderesse. Le dispositif comprend un capot coiffant un bac ou une fosse et comportant des lamelles rapprochées, chaque lamelle présentant des pentes d'écoulement multiples, réservant entre elles un espace assurant auxdits produits coulants un accès à au bac ou à la fosse.

Tous ces dispositifs, bien qu'améliorant nettement la sécurité autour des transformateurs électriques en évitant toute propagation d'un feu en étouffant ce dernier en cas d'inflammation des huiles et en permettant une récupération des huiles au fond du bac ou de la fosse au moyen d'une pompe ou similaire, ne procurent pas une sécurité maximale. En effet, en cas de fortes intempéries de l'eau peut s'introduire dans le bac ou la fosse et provoquer une fuite des huiles à l'extérieur de cette dernière risquant ainsi de polluer l'environnement.

Le document AU 2002 100 386 A4 présente par ailleurs un système de rétention d'huiles disposant d'éléments de drainage de l'eau.

### BREVE DESCRIPTION DE L'INVENTION

L'un des buts de l'invention est donc de remédier à ces inconvénients en proposant un dispositif de sécurité pour bac ou fosse de rétention d'huile polluante, destiné aux équipements pour réseaux de distribution de l'électricité et en particulier aux bacs ou fosses de rétention d'huile pour transformateurs électriques, de conception simple et peu onéreuse, procurant une extinction des huiles et évitant toute pollution de l'environnement y compris en cas d'intempéries.

A cet effet et conformément à l'invention, il est proposé un dispositif de sécurité environnementale pour bac ou fosse de rétention d'huile polluante, destiné aux équipements pour réseaux de distribution de l'électricité et en particulier aux bacs ou fosses de rétention d'huile pour transformateurs électriques; ledit dispositif est remarquable en ce qu'il comporte au moins un bac ou une fosse de réception en particulier de produits chimiques inflammables coulants placée sous un dispositif contenant de tels produits, tel un transformateur électrique, des moyens d'extinction coiffant ledit bac ou ladite fosse, des moyens d'évacuation d'un trop plein de produits dans le bac ou la fosse de réception et des moyens de filtration des produits chimiques inflammables et des moyens de séparation de l'eau et des produits chimiques inflammables contenus dans le bac ou la fosse de réception, lesdits moyens de séparation et les moyens de filtration étant connectés à une conduite d'évacuation de l'eau et consistent en au moins une cartouche comportant un agent gélifiant. Selon une première variante d'exécution, les moyens de filtration sont positionnés dans le bac ou la fosse de réception.

Selon une seconde variante d'exécution, des premiers moyens de filtration sont positionnés dans une première cuve de filtration alimentée par une conduite débouchant dans ledit bac ou ladite fosse de réception et des seconds moyens de filtration sont positionnés dans une seconde cuve de filtration alimentée par une conduite débouchant dans la cuve de séparation.

Selon une troisième variante d'exécution, les moyens de séparation sont positionnés dans une cuve dite cuve de séparation alimentée par une conduite débouchant dans ledit bac ou ladite fosse de réception et les moyens de filtration sont positionnés dans une seconde cuve dite de filtration alimentée par les moyens d'évacuation d'un trop plein.

Lesdits moyens de séparation consistent de préférence dans un séparateur à décantation.

La cartouche est constituée de deux tubes coaxiaux obtenus dans un matériau plastique poreux, l'espace entre les deux tubes étant rempli de l'agent gélifiant.

De plus, l'agent gélifiant consiste en des particules de polymère insoluble dans l'eau et aptes à adsorber les particules d'huile.

De préférence, l'agent gélifiant consiste dans des particules de polymères de styrène et substituant au styrène, des copolymères de chlorure de vinyle incluant un copolymère de chlorure de vinyle et des co-monomères tels que l'acétate de vinyle, le dichloroethylène, l'acrylonitrile, le méthacrylonitrile, les acrylates, les méthacrylates et similaires, les polymères acryliques tels que les polymères de méthylméthacrylate, l'acrylate d'éthyle et similaires, les polymères de styrène tels que le polystyrène et les copolymères de styrène et le divinylebenzène, des polymères et copolymères d'alkyle styrène ou une combinaison de ces particules.

Par ailleurs, les moyens d'extinction consistent en un capot coiffant le bac ou la fosse de réception et comprenant des lamelles pentues réservant entre elles un espace assurant aux produits coulants un accès au bac ou à la fosse de réception tout en évitant une alimentation suffisante en oxygène pour permettre d'entretenir une combustion des huiles.

Chaque lamelle est réalisée en tôle pliée de manière à former un profilé comprenant une partie supérieure bordée sur ses côtés longitudinaux de deux éléments sensiblement verticaux de hauteurs différentes repliés dans leur partie inférieure dans une même direction pour former des pattes d'appui globalement horizontales, la patte d'appui de l'élément vertical le plus haut d'une première lamelle prenant appui sur la patte d'appui de l'élément vertical le plus bas d'une lamelle adjacente.

Selon une variante d'exécution des moyens d'extinction, les moyens d'extinction consistent en un capot coiffant le bac ou la fosse de réception et comprenant des lamelles à pentes multiples réservant entre elles un espace assurant aux produits coulants un accès au bac ou à la fosse de réception tout en évitant une alimentation suffisante en oxygène pour permettre d'entretenir une combustion des huiles.

Selon une seconde variante d'exécution des moyens d'extinction, les moyens d'extinction consistent en un capot coiffant le bac ou la fosse de réception et comprenant au moins deux plaques parallèles de tôles ondulées, les creux d'une première plaque s'étendant sensiblement au droit des pointes de la seconde plaque et les creux de chaque plaque étant munie d'une pluralité de trous procurant un écoulement des huiles dans le bac ou la fosse tout en évitant une alimentation suffisante en oxygène pour permettre d'entretenir une combustion des huiles.

Chaque plaque de tôle ondulée présente des ondulations de forme triangulaire.

Alternativement, chaque plaque de tôle ondulée présente des ondulations de forme sinusoïdale.

Avantageusement, les trous de la première plaque sont décalés par rapport aux trous de la seconde plaque ondulée.

Selon une troisième variante d'exécution des moyens d'extinction, les moyens d'extinction consistent en un capot coiffant le bac ou la fosse de réception et comprenant au moins deux plaques planes parallèles munies de trous, les trous d'une première plaque étant décalés par rapport aux trous de la seconde plaque, et séparées par une couche de matériau poreux.

Ledit matériau poreux consiste dans des particules de polymères de styrène et substituant au styrène, des copolymères de chlorure de vinyle incluant un copolymère de chlorure de vinyle et des co-monomères tels que l'acétate de vinyle, le dichloroethylène, l'acrylonitrile, le méthacrylonitrile, les acrylates, les méthacrylates et similaires, les polymères acryliques tels que les polymères de méthylméthacrylate, l'acrylate d'éthyle et similaires, les polymères de styrène tels que le polystyrène et les copolymères de styrène et le divnylebenzène, des polymères et copolymères d'alkyle styrène ou une combinaison de ces particules.

Selon une quatrième variante d'exécution des moyens d'extinction, les moyens d'extinction consistent en un capot coiffant le bac ou la fosse de réception et comprenant au moins une ondulation formant au moins un creux au fond duquel sont formés une pluralité de trous et sont déposés des éléments granulaires.

Selon une cinquième variante d'exécution des moyens d'extinction, les moyens d'extinction consistent en au moins deux profilés pentus s'étendant depuis deux bords opposés du bac ou de la fosse de réception vers la partie centrale dudit bac ou de ladite fosse de réception en formant un entrefer à travers lequel les huiles peuvent d'écouler tout en évitant une alimentation suffisante en oxygène pour permettre d'entretenir une combustion des huiles.

Les extrémités libres de chaque profilé prennent de préférence appui sur une poutrelle.

Selon une sixième variante d'exécution des moyens d'extinction, les moyens d'extinction consistent en un capot en tôle emboutie coiffant le bac ou la fosse de réception et comportant une pluralité de creux au fond duquel est formé au moins un trou procurant un écoulement des huiles dans le bac ou la fosse de réception tout en évitant une alimentation suffisante en oxygène pour permettre d'entretenir une combustion des huiles.

### BREVE DESCRIPTION DES DESSINS

D'autres avantages et caractéristiques ressortiront mieux de la description qui va suivre de plusieurs variantes d'exécution, données à titre d'exemples non limitatifs, du dispositif de sécurité environnemental conforme à l'invention, en référence aux dessins annexés, sur lesquels :
- la figure 1 est une vue en élévation schématique d'un transformateur électrique positionné au dessus d'un dispositif de sécurité conforme à l'invention,
- la figure 2 est une vue en élévation schématique d'un transformateur électrique positionné au dessus d'une variante d'exécution du dispositif de sécurité conforme à l'invention,
- la figure 3 est une vue en élévation schématique d'un transformateur électrique positionné au dessus d'une seconde variante d'exécution du dispositif de sécurité conforme à l'invention,
- la figure 4 est une vue de dessus des moyens d'extinction du dispositif de sécurité conforme à l'invention,
- la figure 5 est une vue en coupe longitudinale des moyens d'extinction du dispositif de sécurité conforme à l'invention représenté sur la figure 4,
- la figure 6 est une vue en coupe verticale schématique d'une lamelle des moyens d'extinction du dispositif conforme à l'invention, représentés sur les figures 4 et 5,
- la figure 7 est une vue en coupe verticale schématique d'une variante d'exécution des moyens d'extinction du dispositif de sécurité conforme à l'invention,
- la figure 8 est une vue en coupe verticale schématique d'une seconde variante d'exécution des moyens d'extinction du dispositif de sécurité conforme à l'invention,
- la figure 9 est une vue de dessus de la seconde variante d'exécution des moyens d'extinction du dispositif de sécurité conforme à l'invention, représentés sur la figure 8,
- la figure 10 est une vue en coupe verticale schématique d'une troisième variante d'exécution des moyens d'extinction du dispositif de sécurité conforme à l'invention,
- la figure 11 est une vue de dessus de la troisième variante d'exécution des moyens d'extinction du dispositif de sécurité conforme à l'invention, représentés sur la figure 10,
- la figure 12 est une vue en coupe verticale schématique d'une quatrième variante d'exécution des moyens d'extinction du dispositif de sécurité conforme à l'invention,
- la figure 13 est une vue de dessus de la quatrième variante d'exécution des moyens d'extinction du dispositif de sécurité conforme à l'invention, représentés sur la figure 12,
- la figure 14 est une vue en coupe verticale schématique d'une cinquième variante d'exécution des moyens d'extinction du dispositif de sécurité conforme à l'invention,
- la figure 15 est une vue en coupe verticale schématique d'une sixième variante d'exécution des moyens d'extinction du dispositif de sécurité conforme à l'invention,
- la figure 16 est une vue de dessus de la sixième variante d'exécution des moyens d'extinction du dispositif de sécurité conforme à l'invention, représentés sur la figure 15,
- la figure 17 est une vue en coupe verticale schématique d'une dernière variante d'exécution des moyens d'extinction du dispositif de sécurité conforme à l'invention,
- la figure 18 est une vue de dessus de la dernière variante d'exécution des moyens d'extinction du dispositif de sécurité conforme à l'invention, représentés sur la figure 17,

### DESCRIPTION DETAILLEE DE L'INVENTION

On décrira ci-après, à titre d'exemple non limitatif, un dispositif de sécurité pour bac ou fosse de rétention d'huile polluante, destiné aux équipements pour réseaux de distribution de l'électricité et en particulier aux bacs ou fosses de rétention d'huile pour transformateurs électriques; Toutefois, il est bien évident que le dispositif de sécurité suivant l'invention pourra être aisément adapté à toutes les citernes de produits chimiques telles que les huiles usées et polluées par exemple, sans pour autant sortir du cadre de l'invention.

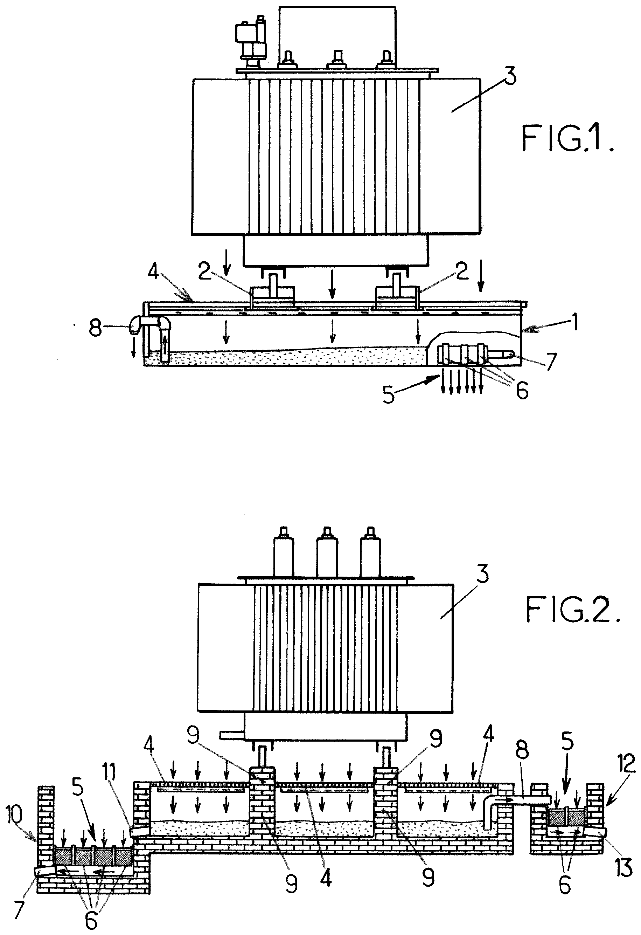

En référence à la figure 1, le dispositif de sécurité suivant l'invention comporte un bac dit de réception 1 obtenue dans du métal, ledit bac étant sensiblement parallélépipédique, et comportant à son extrémité supérieure deux poutrelles 2 de soutènement sur lesquelles prend appui un transformateur électrique 3.

On notera que ce type de bac métallique est particulièrement destinée à un petit transformateur électrique, c'est-à-dire à un transformateur électrique dont la puissance est généralement inférieure ou égale 10mVA, et qu'elle pourra être substituée par une fosse en béton ou en résine synthétique renforcée sans pour autant sortir du cadre de l'invention.

Ledit dispositif comporte des moyens d'extinction 4 coiffant le bac ou la fosse de réception 1 et assurant aux produits coulants un accès au bac ou à la fosse de réception 1 tout en évitant une alimentation suffisante en oxygène pour permettre d'entretenir une combustion des huiles, lesdits moyens d'extinction étant décrits plus en détail plus loin.

Par ailleurs, le dispositif comporte des moyens de filtration 5 positionnés dans le bac ou la fosse de réception 1, sur le fond de cette dernière. Ces moyens de filtration 5 consistent en une ou plusieurs cartouches filtrantes 6 à travers lesquelles le mélange huile/eau est apte à circuler. Lesdits cartouches filtrantes 6 retient l'huile et laisse s'écouler l'eau qui est évacuée par une conduite d'évacuation 7 connectée à un drain d'épandage et/ou au réseau d'évacuation des eaux usées.

Lesdites cartouches filtrantes 6 consistent par exemple dans des cartouches filtrantes telles que décrites dans la demande de brevet internationale WO 2006/084100 par exemple. Chaque cartouche est constituée de deux tubes coaxiaux obtenus, de préférence, dans un matériau plastique poreux, l'espace entre les deux tubes étant rempli d'au moins un agent gélifiant et/ou d'un matériau pulvérulent tel que du sable, du charbon actif, des granules de terre d'infusoires ou des granules d'argile par exemple. L'agent gélifiant consiste en des particules de polymère insolubles dans l'eau et aptes à adsorber les particules d'huile. Par exemple, l'agent gélifiant consiste dans des particules de polymères de styrène et substituant au styrène, des copolymères de chlorure de vinyle incluant un copolymère de chlorure de vinyle et des co-monomères tels que l'acétate de vinyle, le dichloroethylène, l'acrylonitrile, le méthacrylonitrile, les acrylates, les méthacrylates et similaires, les polymères acryliques tels que les polymères de méthylméthacrylate, l'acrylate d'éthyle et similaires, les polymères de styrène tels que le polystyrène et les copolymères de styrène et le divynilbenzène, des polymères et copolymères d'alkyle styrène ou une combinaison de ces particules.

De manière avantageuse, le dispositif comporte également un siphon 8 plongeant jusqu'au fond du bac ou de la fosse de réception 1 de manière à évacuer rapidement une grande quantité d'eau lors de forts intempéries notamment. En effet, l'huile étant moins dense que l'eau, l'huile reste en surface et le siphon 8 n'évacue que l'eau. Ledit siphon 8 est de préférence raccordé par une conduite au réseau d'eaux usées.

De manière particulièrement avantageuse, la sortie du siphon 8 comporte des seconds moyens de filtration non représentés sur la figure 1. Ces moyens de filtration consistent de la même manière que les premiers moyens de filtration 5 en une ou plusieurs cartouches filtrantes 6 telles que décrites précédemment et à travers lesquelles le mélange huile/eau est apte à circuler. Lesdits cartouches filtrantes 6 retient l'huile et laisse s'écouler l'eau qui est évacuée par une conduite d'évacuation 7 connectée à un drain d'épandage et/ou au réseau d'évacuation des eaux usées.

Selon une première variante d'exécution du dispositif de sécurité conforme à l'invention, en référence à la figure 2, ledit dispositif comporte une fosse dite de réception 1 obtenue dans du béton armé étanche, ladite fosse 1 étant sensiblement parallélépipédique, et comportant deux parois de séparation 9 faisant saillie à l'extrémité supérieure de ladite fosse, le transformateur électrique 3 prenant appui sur ses parois de séparation 9. Lesdites parois de séparation forment ainsi trois chambres communicantes dans le bac ou la fosse de réception 1, chacune des chambres étant fermée à son extrémité supérieure par des moyens d'extinction 4 qui seront décrits en détail plus loin.

On observera que ce type de fosse de réception 1 est particulièrement adapté à des transformateurs électriques dont la puissance est supérieure à 5 MVA.

Le dispositif comporte, par ailleurs, une première cuve de filtration 10 à proximité du bac ou de la fosse de réception 1 et généralement obtenue en béton armé étanche. Cette cuve de filtration 10 comporte un fond situé en dessous du fond du bac ou de la fosse de réception 1 et est alimentée en mélange eau/huile par une conduite d'évacuation/alimentation 11 dont les extrémités débouchent respectivement au fond du bac ou de la fosse de réception 1 et dans la partie médiane de la cuve de filtration 10. Au fond de la cuve de filtration 10 sont disposées des moyens de filtration 5 consistant dans une ou plusieurs cartouches filtrantes 6 à travers lesquelles le mélange huile/eau est apte à circuler. Lesdits cartouches filtrantes 6 retient l'huile et laisse s'écouler l'eau qui est évacuée par une conduite d'évacuation 7 connectée à un drain d'épandage et/ou au réseau d'évacuation des eaux usées.

De la même manière que précédemment, lesdites cartouches filtrantes 6 consistent par exemple dans des cartouches filtrantes telles que décrites dans la demande de brevet internationale WO 2006/084100 par exemple. Chaque cartouche est constituée de deux tubes coaxiaux obtenus, de préférence, dans un matériau plastique poreux, l'espace entre les deux tubes étant rempli d'au moins un agent gélifiant et/ou d'un matériau pulvérulent tel que du sable, du charbon actif, des granules de terre d'infusoires ou des granules d'argile par exemple. L'agent gélifiant consiste en des particules de polymère insolubles dans l'eau et aptes à adsorber les particules d'huile. Par exemple, l'agent gélifiant consiste dans des particules de polymères de styrène et substituant au styrène, des copolymères de chlorure de vinyle incluant un copolymère de chlorure de vinyle et des co-monomères tels que l'acétate de vinyle, le dichloroethylène, l'acrylonitrile, le méthacrylonitrile, les acrylates, les méthacrylates et similaires, les polymères acryliques tels que les polymères de méthylméthacrylate, l'acrylate d'éthyle et similaires, les polymères de styrène tels que le polystyrène et les copolymères de styrène et le divnylebenzène, des polymères et copolymères d'alkyle styrène ou une combinaison de ces particules.

Ces moyens de filtration 5 permettent de filtrer en continu le mélange eau/huile présent dans le bac ou la fosse de réception 1.

Afin d'éviter toute pollution de sols lors de forts intempéries, le dispositif comporte une seconde cuve de filtration 12 à proximité du bac ou de la fosse de réception 1 et également obtenue en béton armé étanche. Cette cuve de filtration 12 comporte un fond situé sensiblement au même niveau que le fond du bac ou de la fosse de réception 1 et est alimentée en mélange eau/huile par un siphon 8 dont les extrémités libres débouchent respectivement au fond du bac ou de la fosse de réception 1 et dans la partie supérieure de la seconde cuve de filtration 12. Au fond de la seconde cuve de filtration 12 sont disposées des moyens de filtration 5 consistant dans une ou plusieurs cartouches filtrantes 6 telles que décrites précédemment. Lesdits cartouches filtrantes 6 retient l'huile et laisse s'écouler l'eau qui est évacuée par une conduite d'évacuation 13 connectée à un drain d'épandage et/ou au réseau d'évacuation des eaux usées.

On notera que le siphon 8 est actionné que lorsque le niveau du mélange eau/huile atteint un niveau critique, les moyens de mesure du niveau, tels qu'une jauge par exemple, ainsi que les moyens d'actionnement du siphon n'étant pas représentés sur la figure 2.

Il va de soi que les cuves de filtration 10 et 12 pourront consister dans des bacs ou des fosses sans pour autant sortir du cadre de l'invention.

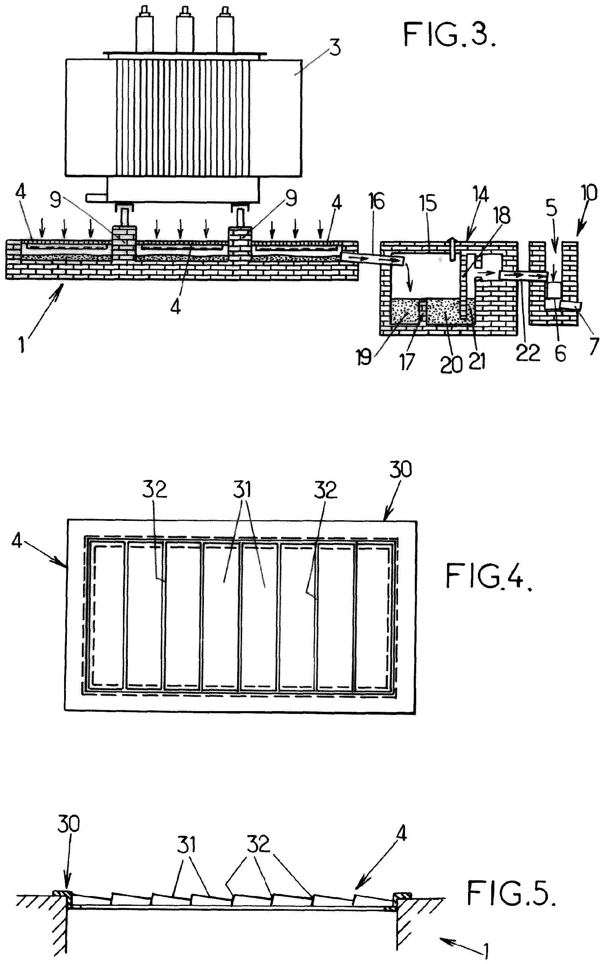

Selon une seconde variante d'exécution du dispositif de sécurité conforme à l'invention, en référence à la figure 3, ledit dispositif comporte de la même manière que précédemment un bac ou une fosse dite de réception 1 obtenue dans du béton armé étanche, ladite fosse 1 étant sensiblement parallélépipédique, et comportant deux parois de séparation 9 faisant saillie à l'extrémité supérieure dudit bac ou de ladite fosse, le transformateur électrique 3 prenant appui sur ses parois de séparation 9. Lesdites parois de séparation 9 forment ainsi trois chambres communicantes dans le bac ou la fosse de réception 1, chacune des chambres étant fermée à son extrémité supérieure par des moyens d'extinction 4 qui seront décrits en détail plus loin.

Le dispositif suivant l'invention comporte, par ailleurs, des moyens de séparation eau/huile 14 constitués d'un séparateur eau-huile 15 alimenté par une conduite 16 dont les extrémités libres débouchent respectivement au fond du bac ou de la fosse de réception 1 et dans la partie supérieure au droit de la chambre dite d'entrée du séparateur eau-huile 15. Ledit séparateur eau-huile 15 consiste en un séparateur dit rectangulaire ou à décantation constitué d'une cuve parallélépipédique 16 en béton armé étanche comprenant une paroi verticale 17 s'étendant depuis le fond de la cuve 16 sur une faible hauteur et une paroi verticale 18 s'étendant depuis l'extrémité supérieure de ladite cuve 16 de telle manière que l'extrémité inférieure de la paroi verticale 18 forme un espace avec le fond de la cuve 16, lesdites parois verticales 17 et 18 formant respectivement une chambre dite d'entrée 19 où se déversent le mélange eau-huile, une chambre dite de séparation 20 eau-huile dans laquelle a lieu la coalescence des particules d'huiles et une chambre dite de sortie 21 où l'eau débarrassée de l'huile peut être évacuée.

Afin d'éviter toute pollution de sols lors de forts intempéries, une forte pluie risquant de saturer le séparateur 15, le dispositif suivant l'invention comporte par ailleurs une cuve de filtration 10 à proximité du séparateur et généralement obtenue en béton armé étanche. Cette cuve de filtration 10 est alimentée par une conduite d'évacuation/alimentation 22 dont les extrémités débouchent respectivement dans la chambre de sortie 21 du séparateur 15 et dans la partie supérieure de la cuve de filtration 10. Au fond de la cuve de filtration 10 sont disposées des moyens de filtration 5 consistant dans une ou plusieurs cartouches filtrantes 6 à travers lesquelles le mélange huile/eau est apte à circuler. Lesdits cartouches filtrantes 6 retient l'huile et laisse s'écouler l'eau qui est évacuée par une conduite d'évacuation 7 connectée à un drain d'épandage et/ou au réseau d'évacuation des eaux usées.

De la même manière que précédemment, lesdites cartouches filtrantes 6 consistent par exemple dans des cartouches filtrantes telles que décrites dans la demande de brevet internationale WO 2006/084100 par exemple.

Il va de soi que le séparateur dit rectangulaire ou à décantation 15 pourra être substitué par tout séparateur eau-huile tel qu'un séparateur lamellaire ou un séparateur lamellaire coalescent par exemple sans pour autant sortir du cadre de l'invention.

Par exemple, le séparateur lamellaire consiste en une cuve comportant deux parois verticales s'étendant depuis la partie supérieure de ladite cuve jusqu'à proximité du fond de ladite cuve formant une chambre d'entrée dans laquelle débouche la conduite d'évacuation du mélange huile/eau, ladite conduite étant connectée au bac ou à la fosse de réception, une chambre médiane dans laquelle s'étend une pluralité de lamelles verticales et une chambre de sortie dans laquelle débouche une conduite d'évacuation de l'eau. Le séparateur lamellaire coalescent comporte de manière additionnelle des lamelles dites coalescentes obtenues dans un matériau coalescent et positionnées entre deux lamelles successives de la chambre médiane. Les lamelles coalescentes sont obtenues dans du polypropylène et/ou du Polychlorure de vinyle (PVC).

On observera que le dimensionnement du séparateur pourra aisément être calculé par l'Homme du Métier en fonction essentiellement de la vitesse ascensionnelle des gouttelettes d'huile, de la surface horizontale minimale du séparateur et la surface minimale du séparateur.

On décrira désormais plus en détail les moyens d'extinction 4 du dispositif de sécurité conforme à l'invention en référence aux figures 4 à 18.

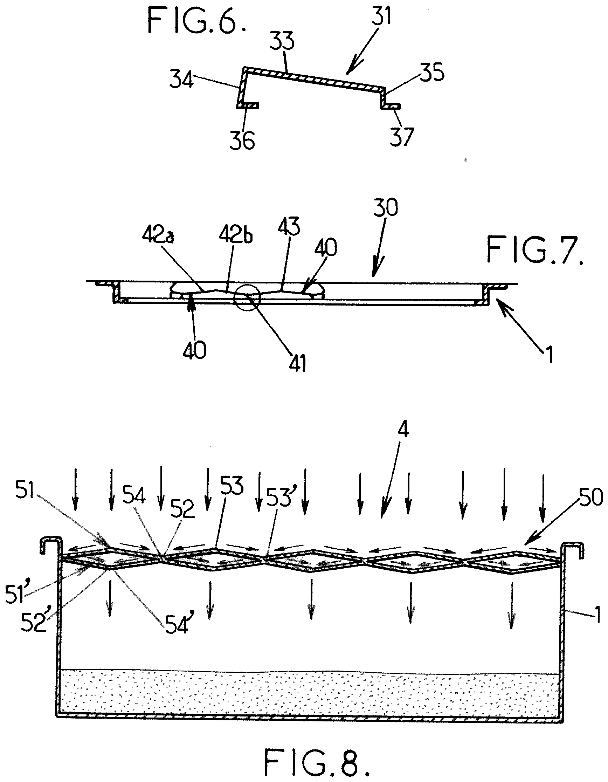

Selon une première variante d'exécution, en référence aux figures 4 à 6, les moyens d'extinction 4 consistent en un capot 30 coiffant le bac ou la fosse de réception 1 et comprenant des lamelles pentues 31 réservant entre elles un espace 32 assurant aux produits coulants un accès au bac ou à la fosse de réception 1 tout en évitant une alimentation suffisante en oxygène pour permettre d'entretenir une combustion des huiles. En référence à la figure 6, chaque lamelle 31 est réalisée en tôle pliée de manière à former un profilé comprenant une partie supérieure 33 bordée sur ses côtés longitudinaux de deux éléments sensiblement verticaux 34,35 de hauteurs différentes repliés dans leur partie inférieure dans une même direction pour former des pattes d'appui 36,37 globalement horizontales, la patte d'appui 36 de l'élément vertical le plus haut 34 d'une première lamelle 31 prenant appui sur la patte d'appui 37 de l'élément vertical le plus bas 35 d'une lamelle 31 adjacente.

Selon une seconde variante d'exécution, en référence à la figure 7, les moyens d'extinction 4 consistent en un capot 30 coiffant le bac ou la fosse de réception 1 et comprenant des lamelles à pentes multiples 40 réservant entre elles un espace 41 assurant aux produits coulants un accès au bac ou à la fosse de réception 1 tout en évitant une alimentation suffisante en oxygène pour permettre d'entretenir une combustion des huiles. Chaque lamelle 40 comporte de préférence deux pentes 42a et 42b pour l'écoulement du produit, et de préférence des pentes 42a,42b de surfaces identiques séparées par une unique ligne de crête 43. De tels moyens d'extinction 4 sont décrits par ailleurs en détail dans la demande de brevet WO 2009/016203 déposée par la Demanderesse.

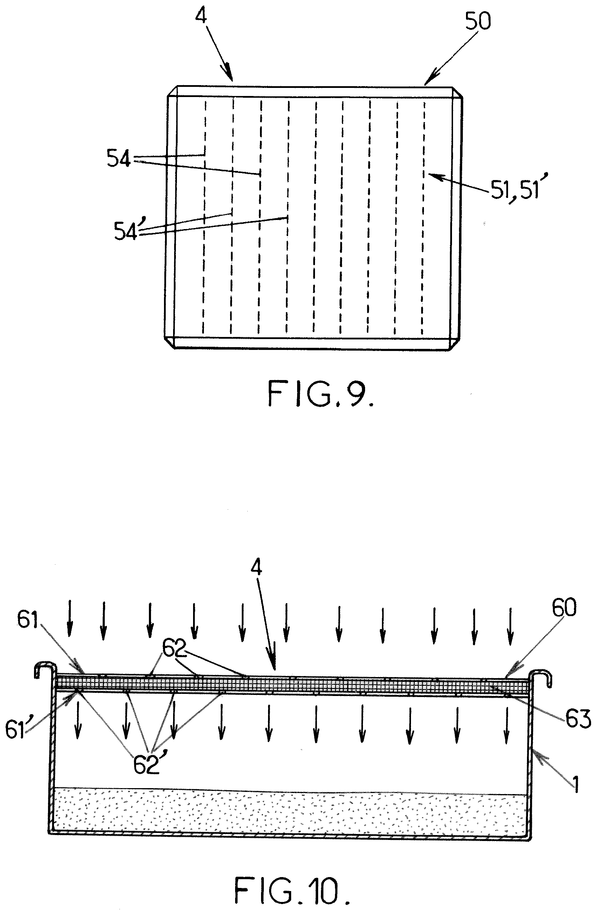

Selon une troisième variante d'exécution, en référence aux figures 8 et 9, les moyens d'extinction 4 consistent en un capot 50 coiffant le bac ou la fosse de réception 1 et comprenant au moins deux plaques 51 et 51' parallèles de tôles ondulées, les creux 52 d'une première plaque 51 s'étendant sensiblement au droit des pointes 53' de la seconde plaque 51' et les creux 52,52' de chaque plaque 51,51' étant munie d'une pluralité de trous 54 et respectivement 54' procurant un écoulement des huiles dans le bac ou la fosse de réception 1 tout en évitant une alimentation suffisante en oxygène pour permettre d'entretenir une combustion des huiles. Dans cet exemple particulier de réalisation, chaque plaque 51,51'de tôle ondulée présente des ondulations de forme triangulaire ; toutefois, il est bien évident que chaque plaque de tôle ondulée pourra présenter des ondulations de forme quelconque telle qu'une forme sinusoïdale par exemple sans sortir du cadre de l'invention.

Accessoirement, les trous 54 de la première plaque 51 pourront être décalés de quelques millimètres par rapport aux trous 54' de la seconde plaque ondulée 51' sans sortir du cadre de l'invention.

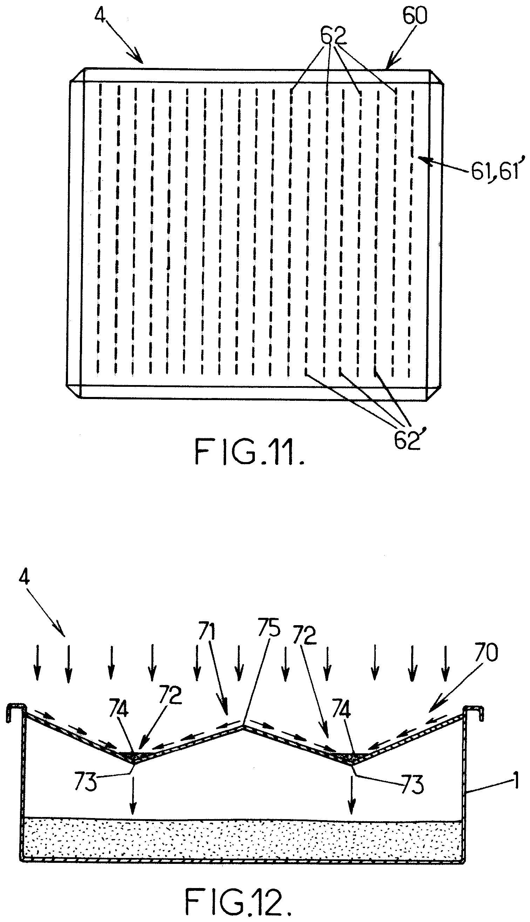

Selon une quatrième variante d'exécution, en référence aux figures 10 et 11, les moyens d'extinction 4 consistent en un capot 60 coiffant le bac ou la fosse de réception 1 et comprenant au moins deux plaques planes parallèles 61 et 61' munies de trous 62 et respectivement 62', les trous 62 d'une première plaque 61 étant décalés par rapport aux trous 62' de la seconde plaque 61', et séparées par une couche 63 de matériau poreux, adsorbent et/ou absorbant et/un agent gélifiant.

Ladite couche 63 pourra par exemple comporter un matériau pulvérulent tel que du sable, du charbon actif, des granules de terre d'infusoires ou des granules d'argile par exemple, des particules de polymères de styrène et substituant au styrène, des copolymères de chlorure de vinyle incluant un copolymère de chlorure de vinyle et des co-monomères tels que l'acétate de vinyle, le dichloroethylène, l'acrylonitrile, le méthacrylonitrile, les acrylates, les méthacrylates et similaires, les polymères acryliques tels que les polymères de méthylméthacrylate, l'acrylate d'éthyle et similaires, les polymères de styrène tels que le polystyrène et les copolymères de styrène et le divnylebenzène, des polymères et copolymères d'alkyle styrène ou une combinaison de ces particules.

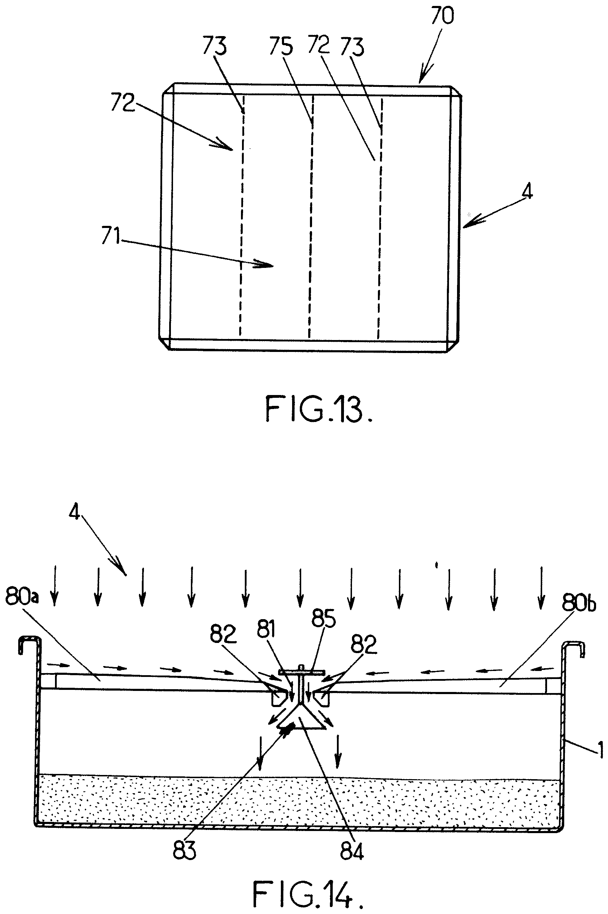

Selon une cinquième variante d'exécution, en référence aux figures 12 et 13, les moyens d'extinction consistent en un capot 70 coiffant le bac ou la fosse de réception 1, obtenu dans une plaque de tôle et comprenant au moins une ondulation 71 formant au moins un creux 72 au fond duquel sont formés une pluralité de trous 73 et sont déposés au moins une couche 74 d'éléments granulaires. Ainsi, le dispositif peut ne comprendre qu'une couche 74 d'éléments granulaires de granulométrie homogène ou une pluralité de couches 74 d'éléments granulaires, chaque couche présentant une granulométrie différente, par exemple une succession de couches de granulométries croissantes ou décroissantes. Les deux creux successifs 72 sont séparés par une ligne de crête 75.

Il va de soit que les dimensions des trous 73 sont inférieures aux dimensions des éléments granulaires de la couche 74.

Selon une sixième variante d'exécution, en référence à la figure 14, les moyens d'extinction consistent en au moins deux profilés pentus 80a et 80b, chaque profilé présentant une section en forme d'aile d'avion, s'étendant depuis deux bords opposés du bac ou de la fosse de réception 1 vers la partie centrale dudit bac ou de la dite cuve 1 en formant un entrefer 81 à travers lequel les huiles peuvent s'écouler tout en évitant une alimentation suffisante en oxygène pour permettre d'entretenir une combustion des huiles. Les extrémités libres des profilés 80a, 80b prennent respectivement appui sur une poutrelle 82. De plus, les moyens d'extinction 4 comportent des moyens 83 d'obturation partielle de l'entrefer 81. Lesdits moyens d'obturation 83 comportent essentiellement d'une part un clapet 84 longitudinal de section transversale en forme de triangle, s'étendant au droit de l'entrefer 81 sous les profilés, la pointe du clapet orienté vers le haut, et d'autre part des moyens de réglage 85 de la hauteur du clapet dans l'entrefer 81.

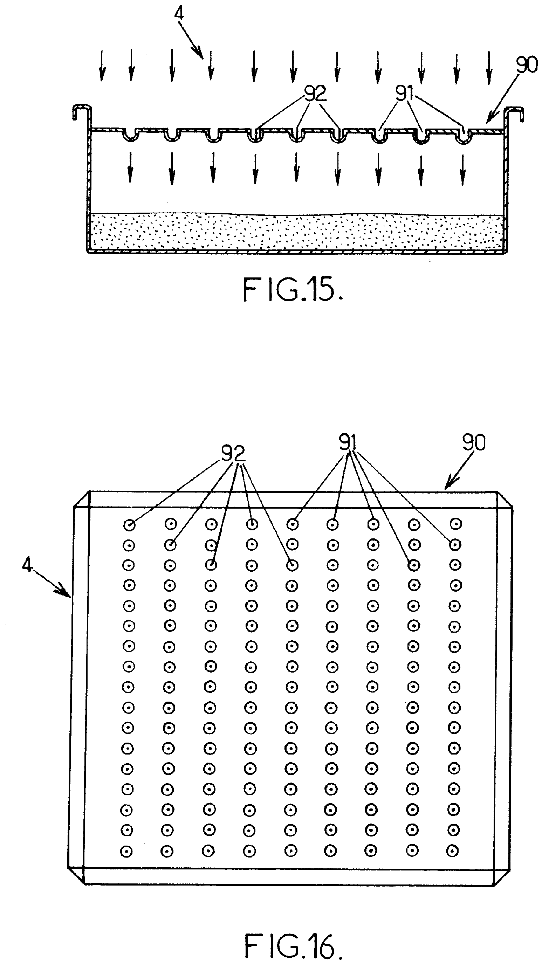

Selon une septième variante d'exécution, en référence aux figures 15 et 16, les moyens d'extinction 4 consistent en un capot 90 en tôle emboutie coiffant le bac ou la fosse de réception 1 et comportant une pluralité de creux 91 au fond duquel est formé au moins un trou 92 procurant un écoulement des huiles dans le bac ou la fosse de réception tout en évitant une alimentation suffisante en oxygène pour permettre d'entretenir une combustion des huiles. De préférence, entre deux creux successifs 91, la tôle emboutie sera légèrement bombée afin de permettre l'écoulement de l'huile jusque dans les creux 91. Les trous 92 seront obtenus par poinçonnage ou par perçage de la tôle par exemple.

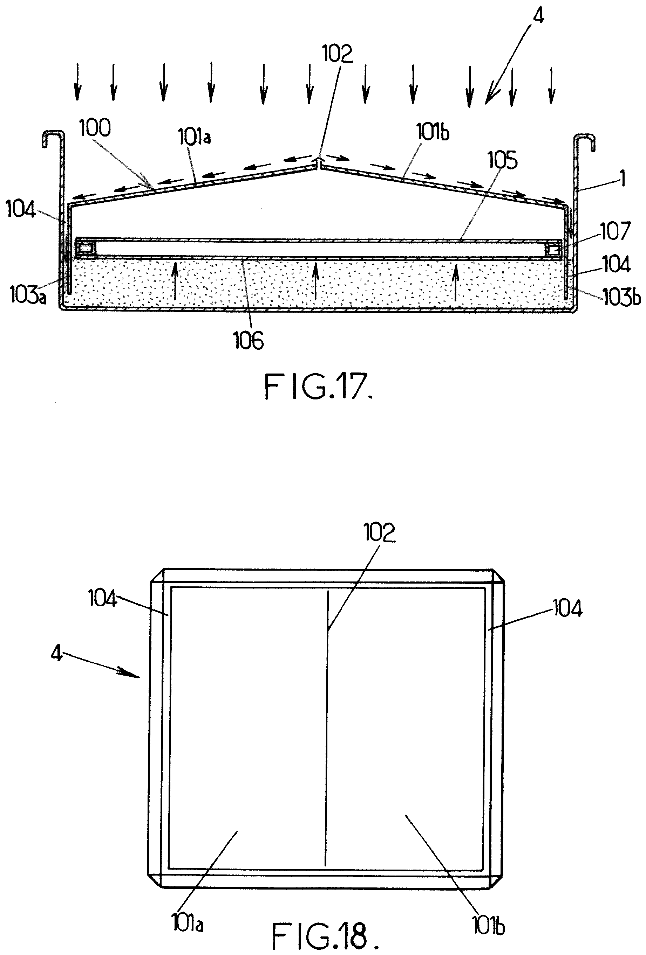

Selon une autre variante d'exécution, en référence aux figures 17 et 18, les moyens d'extinction 4 sont constitués d'un déflecteur 100 de dimensions sensiblement égales aux dimensions du bac ou de la fosse de réception 1 comportant dans sa partie supérieure aux moins deux pentes d'écoulement 101a et 101b séparées par une ligne de crête 102 et, dans sa partie inférieure, deux parois verticales 103a et respectivement 103b s'étendant depuis les extrémité inférieures des pentes 101a et respectivement 101b parallèlement aux parois du bac ou de la fosse de réception 1 en formant un espace 104 dans lequel les huiles peuvent s'écouler tout en évitant une alimentation suffisante en oxygène pour permettre d'entretenir une combustion des huiles. De manière avantageuse, ledit déflecteur 100 coiffe un couvercle flottant 105 permettant de minimiser le contact de l'huile avec l'air ambiant. On notera que le couvercle flottant 105 pourra consister par exemple dans une membrane 106 en matière plastique ignifugée munie à sa périphérie d'un flotteur 107.

Accessoirement, les éléments des moyens d'extinction 4 que l'on vient de décrire, tels que les lamelles, les profilés, les plaques de tôle ondulée, les plaques de tôle emboutie par exemple, pourront avantageusement être recouverte d'une couche de matériau à faible coefficient de friction, tel que le polytétrafluoréthylène (PTFE) commercialisé sous la marque déposée Téflon par exemple, afin d'accélérer l'écoulement de l'huile jusque dans le bac ou la fosse de réception 1.

Selon une dernière variante d'exécution non représentée sur les figures, les moyens d'extinction 4 pourront consister en un caillebottis métallique positionné à l'extrémité supérieure du bac ou de la fosse de réception 1 et en des cartouches en verre remplies d'un produit naturel, tel que du sucre dissout dans l'eau par exemple. Lorsque de l'huile prend feu dans le bac ou la fosse de réception, les cartouches en verre explosent sous l'effet de la chaleur et de l'augmentation de la pression à l'intérieur des cartouches vaporisant le produit sur le feu qui s'éteint alors.

Enfin, il est bien évident que les exemples que l'on vient de donner ne sont que des illustrations particulières, en aucun cas limitatives quant aux domaines d'application de l'invention.

## Revendications

1. Dispositif de sécurité environnementale pour bac ou fosse de rétention d'huile polluante, destiné aux équipements pour réseaux de distribution de l'électricité et en particulier aux bacs ou fosses de rétention d'huile pour transformateurs électriques, qui comporte au moins un bac ou une fosse de réception (1) en particulier de produits chimiques inflammables coulants placé sous un dispositif contenant de tels produits, tel un transformateur électrique, des moyens d'extinction (4) coiffant ledit bac ou ladite fosse (1), des moyens d'évacuation (8) d'un trop plein de produits dans le bac ou la fosse de réception (1) et des moyens de filtration (5) des produits chimiques inflammables et des moyens de séparation (14) de l'eau et des produits chimiques inflammables contenus dans le bac ou la fosse de réception (1), lesdits moyens de séparation (14) et les moyens de filtration (5) étant connectés à une conduite d'évacuation de l'eau et consistant en au moins une cartouche (6) comportant un agent gélifiant.

2. Dispositif suivant la revendication 1, **caractérisé en ce que** les moyens de filtration (5) sont positionnés dans le bac ou la fosse de réception (1).

3. Dispositif suivant la revendication 1, **caractérisé en ce que** des premiers moyens de filtration (5) sont positionnés dans une première cuve de filtration (10) alimentée par une conduite (11) débouchant dans ledit bac ou ladite fosse de réception (1) et des seconds moyens de filtration (5) sont positionnés dans une seconde cuve de filtration (12) alimentée par les moyens d'évacuation (8) d'un trop plein.

4. Dispositif selon la revendication précédente, dans lequel la première cuve de filtration (10) comporte un fond situé en dessous du fond dudit bac ou de ladite fosse de réception (1) et dans lequel la conduite (11) présente deux extrémités débouchant respectivement au fond dudit bac ou de ladite fosse de réception (1) et dans une partie médiane de la première cuve de filtration (10).

5. Dispositif suivant la revendication 1, **caractérisé en ce que** les moyens de séparation (14) sont positionnés dans une cuve dite cuve de séparation (15) alimentée par une conduite (16) débouchant dans ledit bac ou ladite fosse de réception (1) et les moyens de filtration (5) sont positionnés dans une seconde cuve dite de filtration (10) alimentée par une conduite (22) débouchant dans la cuve de séparation (15).

6. Dispositif selon la revendication précédente, dans lequel les moyens de séparation (14) consistent en un séparateur (15) alimenté par une conduite (16) dont les extrémités débouchent respectivement au fond dudit bac ou de ladite fosse de réception (1) et dans une partie supérieure au droit d'une chambre d'entrée du séparateur (15).

7. Dispositif suivant l'une quelconque des revendications 1 à 6, **caractérisé en ce que** les moyens de séparation (14) consistent en un séparateur à décantation (15).

8. Dispositif suivant l'une quelconque des revendications 1 à 7, **caractérisé en ce que** les moyens d'extinction (4) consistent en un capot (30) coiffant le bac ou la fosse de réception (1) et comprenant des lamelles (31) pentues réservant entre elles un espace (32) assurant aux produits coulants un accès au bac ou à la fosse de réception (1) tout en évitant une alimentation suffisante en oxygène pour permettre d'entretenir une combustion des huiles.

9. Dispositif suivant l'une quelconque des revendications 1 à 7, **caractérisé en ce que** les moyens d'extinction (4) consistent en un capot (30) coiffant le bac ou la fosse de réception (1) et comprenant des lamelles (40) à pentes multiples réservant entre elles un espace (41) assurant aux produits coulants un accès au bac ou à la fosse de réception (1) tout en évitant une alimentation suffisante en oxygène pour permettre d'entretenir une combustion des huiles.

10. Dispositif suivant l'une quelconque des revendications 1 à 7, **caractérisé en ce que** les moyens d'extinction (4) consistent en un capot coiffant (50) le bac ou la fosse de réception (1) et comprenant au moins deux plaques(51,51') parallèles de tôles ondulées, les creux (52) d'une première plaque (51) s'étendant sensiblement au droit des pointes (53') de la seconde plaque (51') et les creux (52,52') de chaque plaque (51,51') étant munie d'une pluralité de trous (54,54') procurant un écoulement des huiles dans le bac ou la fosse (1) tout en évitant une alimentation suffisante en oxygène pour permettre d'entretenir une combustion des huiles.

11. Dispositif suivant l'une quelconque des revendications 1 à 7, **caractérisé en ce que** les moyens d'extinction (4) consistent en un capot (60) coiffant le bac ou la fosse de réception (1) et comprenant au moins deux plaques planes parallèles (61,61') munies de trous (62,62'), les trous (62) d'une première plaque (61) étant décalés par rapport aux trous (62') de la seconde plaque (61'), et séparées par une couche (63) de matériau poreux.

12. Dispositif suivant l'une quelconque des revendications 1 à 7, **caractérisé en ce que** les moyens d'extinction (4) consistent en un capot (70) coiffant le bac ou la fosse de réception (1) et comprenant au moins une ondulation (71) formant au moins un creux (72) au fond duquel sont formés une pluralité de trous (73) et sont déposés des éléments granulaires (74).

13. Dispositif suivant l'une quelconque des revendications 1 à 7, **caractérisé en ce que** les moyens d'extinction (4) consistent en au moins deux profilés pentus (80a,80b) s'étendant depuis deux bords opposés du bac ou de la fosse de réception (1) vers la partie centrale dudit bac ou de ladite fosse de réception (1) en formant un entrefer (81) à travers lequel les huiles peuvent d'écouler tout en évitant une alimentation suffisante en oxygène pour permettre d'entretenir une combustion des huiles.

14. Dispositif suivant l'une quelconque des revendications 1 à 7, **caractérisé en ce que** les moyens d'extinction (4) consistent en un capot en tôle emboutie (90) coiffant le bac ou la fosse de réception (1) et comportant une pluralité de creux (91) au fond duquel est formé au moins un trou (92) procurant un écoulement des huiles dans le bac ou la fosse de réception (1) tout en évitant une alimentation suffisante en oxygène pour permettre d'entretenir une combustion des huiles.

## Patentansprüche

1. Umweltschutzvorrichtung für einen Behälter oder eine Grube zum Auffangen von umweltschädlichem Öl, die für Ausrüstungen für Stromvertriebsnetze, und im Speziellen für Behälter oder Gruben zum Auffangen von Öl für elektrische Transformatoren bestimmt ist, die zumindest einen Aufnahmebehälter oder eine Aufnahmegrube (1) im Speziellen für fließende entflammbare Chemikalien umfasst, der/die unter einer Vorrichtung, wie einem elektrischen Transformator, platziert wird, die solche Produkte enthält, Löschmittel (4), die den besagten Behälter oder die Grube (1) bedecken, Evakuierungsmittel (8) für einen Produktüberlauf in den einen Aufnahmebehälter oder eine Aufnahmegrube (1) und Filtermittel (5) für die entflammbaren Chemikalien und Mittel zum Trennen (14) des Wassers und der entflammbaren Chemikalien, die im Aufnahmebehälter oder der Aufnahmegrube (1) enthalten sind, wobei die besagten Mittel zum Trennen (14) und die Filtermittel (5) mit einer Evakuierungsleitung für das Wasser verbunden sind, und aus zumindest einer Kartusche (6) bestehen, die ein Geliermittel umfasst.

2. Vorrichtung nach Anspruch 1, **dadurch gekennzeichnet, dass** die Filtermittel (5) im Aufnahmebehälter oder der Aufnahmegrube (1) positioniert sind.

3. Vorrichtung nach Anspruch 1, **dadurch gekennzeichnet, dass** erste Filtermittel (5) in einem ersten Filterbehälter (10) positioniert sind, der durch eine Leitung (11) beschickt wird, die in den besagten Aufnahmebehälter oder die besagte Aufnahmegrube (1) mündet, und zweite Filtermittel (5) in einem zweiten Filterbehälter (12) positioniert sind, der durch die Evakuierungsmittel (8) eines Überlaufs beschickt wird.

4. Vorrichtung nach dem vorhergehenden Anspruch, wobei der erste Filterbehälter (10) einen Boden umfasst, der sich unterhalb des Bodens des besagten Aufnahmebehälters oder der besagten Aufnahmegrube (1) befindet, und wobei die Leitung (11) zwei Enden aufweist, die jeweils in den Boden des besagten Aufnahmebehälters oder der besagten Aufnahmegrube (1) und in einen Mittelabschnitt des ersten Filterbehälters (10) münden.

5. Vorrichtung nach Anspruch 1, **dadurch gekennzeichnet, dass** die Mittel zum Trennen (14) in einem Trennbehälter (15) genannten Behälter positioniert sind, der durch eine Leitung (16) beschickt wird, die in den besagten Aufnahmebehälter oder die besagte Aufnahmegrube (1) mündet und die Filtermittel (5) in einem zweiten Filterbehälter (10) genannten Behälter positioniert sind, der durch eine Leitung (22) beschickt wird, die in den Trennbehälter (15) mündet.

6. Vorrichtung nach dem vorhergehenden Anspruch, wobei die Mittel zum Trennen (14) aus einem Abscheider (15) bestehen, der durch eine Leitung (16) beschickt wird, deren Enden jeweils in den Boden des besagten Aufnahmebehälters oder der besagten Aufnahmegrube (1) und in einen oberen Abschnitt auf Höhe einer Eintrittskammer des Abscheiders (15) münden.

7. Vorrichtung nach irgendeinem der Ansprüche 1 bis 6, **dadurch gekennzeichnet, dass** die Mittel zum Trennen (14) aus einem Sinkabscheider (15) bestehen.

8. Vorrichtung nach irgendeinem der Ansprüche 1 bis 7, **dadurch gekennzeichnet, dass** die Löschmittel (4) aus einer Abdeckung (30) bestehen, die den Aufnahmebehälter oder die Aufnahmegrube (1) abdeckt, und abfallende Lamellen (31) umfassend, die zwischen sich einen Raum (32) freilassen, die den fließenden Produkten einen Zugang zum Aufnahmebehälter oder zur Aufnahmegrube (1) ermöglichen, und dabei eine Sauerstoffzuführung verhindern, die ausreicht, um eine Verbrennung der Öle unterhalten zu können.

9. Vorrichtung nach irgendeinem der Ansprüche 1 bis 7, **dadurch gekennzeichnet, dass** die Löschmittel (4) aus einer Abdeckung (30) bestehen, die den Aufnahmebehälter oder die Aufnahmegrube (1) abdeckt, und Lamellen (40) mit mehreren Neigungen umfassend, die zwischen sich einen Raum (41) freilassen, die den fließenden Produkten einen Zugang zum Aufnahmebehälter oder zur Aufnahmegrube (1) ermöglichen, und dabei eine Sauerstoffzuführung verhindern, die ausreicht, um eine Verbrennung der Öle unterhalten zu können.

10. Vorrichtung nach irgendeinem der Ansprüche 1 bis 7, **dadurch gekennzeichnet, dass** die Löschmittel (4) aus einer Abdeckung (50) bestehen, die den Aufnahmebehälter oder die Aufnahmegrube (1) abdeckt, und zumindest zwei parallele Platten (51, 51') aus Wellblech umfassend, wobei sich die Hohlräume (52) einer ersten Platte (51) in etwa auf Höhe der Spitzen (53') der zweiten Platte (51') erstrecken und die Hohlräume (52, 52') einer jeden Platte (51, 51') mit einer Vielzahl von Löchern (54, 54') versehen sind, die einen Strom der Öle in den Behälter oder die Grube (1) ermöglichen, und dabei eine Sauerstoffzuführung verhindern, die ausreicht, um eine Verbrennung der Öle unterhalten zu können.

11. Vorrichtung nach irgendeinem der Ansprüche 1 bis 7, **dadurch gekennzeichnet, dass** die Löschmittel (4) aus einer Abdeckung (60) bestehen, die den Aufnahmebehälter oder die Aufnahmegrube (1) abdeckt, und zumindest zwei parallele ebene Platten (61, 61') umfassend, die mit Löchern (62, 62') versehen sind, wobei die Löcher (62) einer ersten Platte (61) im Verhältnis zu den Löchern (62') der zweiten Platte (61') versetzt sind und durch eine Schicht (63) aus porösem Material getrennt sind.

12. Vorrichtung nach irgendeinem der Ansprüche 1 bis 7, **dadurch gekennzeichnet, dass** die Löschmittel (4) aus einer Abdeckung (70) bestehen, die den Aufnahmebehälter oder die Aufnahmegrube (1) abdeckt, und zumindest eine Welligkeit (71) umfassend, die zumindest einen Hohlraum (72) bildet, an dessen Boden eine Vielzahl von Löchern (73) gebildet werden und körnige Elemente (74) abgelegt sind.

13. Vorrichtung nach irgendeinem der Ansprüche 1 bis 7, **dadurch gekennzeichnet, dass** die Löschmittel (4) aus zumindest zwei geneigten Profilen (80a, 80b) bestehen, die sich aus zwei gegenüberliegenden Rändern des Aufnahmebehälters oder der Aufnahmegrube (1) in den zentralen Abschnitt des besagten Aufnahmebehälters oder der Aufnahmegrube (1) erstrecken, und einen Luftspalt (81) bilden, durch den die Öle strömen können, wobei eine Sauerstoffzuführung verhindert wird, die ausreicht, um eine Verbrennung der Öle unterhalten zu können.

14. Vorrichtung nach irgendeinem der Ansprüche 1 bis 7, **dadurch gekennzeichnet, dass** die Löschmittel (4) aus einer Abdeckung aus tiefgezogenem Blech (90) besteht, die den Aufnahmebehälter oder die Aufnahmegrube (1) abdeckt, und eine Vielzahl von Hohlräumen (91) umfassend, an deren Boden zumindest ein Loch (92) gebildet wird, das für einen Strom der Öle in den Aufnahmebehälter oder die Aufnahmegrube (1) sorgt, wobei eine Sauerstoffzuführung verhindert wird, die ausreicht, um eine Verbrennung der Öle unterhalten zu können.

## Claims

1. Environmental security device for a tank or ditch for retaining polluting oil, intended for the equipment of an electricity distribution network and in particular for tanks or pits for retaining transformer oil, comprising at least one receiving tank or pit (1), in particular for flowing flammable chemical products, placed under a device containing such products, like a transformer, extinction means (4) covering said tank or said pit (1), means (8) for evacuating an excess of products in the receiving tank or pit (1) and means (5) for filtering the flammable chemical products and means (14) for separating the water and the flammable chemical products contained in the receiving tank or pit (1), said separation means (14) and the filtering means (5) being connected to a pipe for evacuating the water and consisting of at least one cartridge (6) comprising a gelling agent.

2. Device according to claim 1, **characterised in that** the filtering means (5) are positioned in the receiving tank or pit (1).

3. Device according to claim 1, **characterised in that** first filtering means (5) are positioned in a first filtration tank (10) supplied by a pipe (11) opening into said receiving tank or pit (1) and second filtering means (5) are positioned in a second filtration tank (12) supplied by the means (8) for evacuating excess.

4. Device according to the previous claim, wherein the first filtering tank (10) comprises a bottom located below the bottom of said receiving tank or pit (1) and wherein the pipe (11) has two ends opening into the bottom of said receiving tank or pit (1) and into a median portion of the first filtration tank (10), respectively.

5. Device according to claim 1, **characterised in that** the separation means (14) are positioned in a tank, called separation tank (15), supplied by a pipe (16) opening into said receiving tank or pit (1) and the filtering means (5) are positioned in a second tank, called filtration tank (10), supplied by a pipe (22) opening into the separation tank (15).

6. Device according to the previous claim, wherein the separation means (14) consist of a separator (15) supplied by a pipe (16), the ends of which open into the bottom of said receiving tank or pit (1) and into an upper portion vertically in line with an intake chamber of the separator (15), respectively.

7. Device according to any one of claims 1 to 6, **characterised in that** the separation means (14) consist of a decantation separator (15).

8. Device according to any one of claims 1 to 7, **characterised in that** the extinction means (4) consist of a cover (30) covering the receiving tank or pit (1) and comprising sloping slats (31) maintaining a space (32) between them that provides the flowing products access to the receiving tank or pit (1) while preventing a supply of oxygen sufficient to allow combustion of the oils to be sustained.

9. Device according to any one of claims 1 to 7, **characterised in that** the extinction means (4) consist of a cover (30) covering the receiving tank or pit (1) and comprising slats (40) having multiple slopes, maintaining a space (41) between them that provides the flowing products access to the receiving tank or pit (1) while preventing a supply of oxygen sufficient to allow combustion of the oils to be sustained.

10. Device according to any one of claims 1 to 7, **characterised in that** the extinction means (4) consist of a cover (50) covering the receiving tank or pit (1) and comprising at least two parallel plates (51, 51') of corrugated sheets of metal, the troughs (52) of a first plate (51) extending substantially vertically in line with the crests (53') of the second plate (51') and the troughs (52, 52') of each plate (51, 51') being provided with a plurality of holes (54, 54') providing a flow of the oils into the tank or pit (1) while preventing a supply of oxygen sufficient to allow combustion of the oils to be sustained.

11. Device according to any one of claims 1 to 7, **characterised in that** the extinction means (4) consist of a cover (60) covering the receiving tank or pit (1) and comprising at least two parallel flat plates (61, 61') provided with holes (62, 62'), the holes (62) of a first plate (61) being offset with respect to the holes (62') of the second plate (61'), and separated by a layer (63) of porous material.

12. Device according to any one of claims 1 to 7, **characterised in that** the extinction means (4) consist of a cover (70) covering the receiving tank or pit (1) and comprising at least one corrugation (71) forming at least one trough (72), at the bottom of which a plurality of holes (73) are formed and granular elements (74) are deposited.

13. Device according to any one of claims 1 to 7, **characterised in that** the extinction means (4) consist of at least two sloping profiles (80a, 80b) extending from two opposite edges of the receiving tank or pit (1) towards the central portion of said receiving tank or pit (1) and forming an air gap (81) through which the oils can flow while preventing a supply of oxygen sufficient to allow combustion of the oils to be sustained.

14. Device according to any one of claims 1 to 7, **characterised in that** the extinction means (4) consist of a cover made from stamped sheet metal (90), covering the receiving tank or pit (1) and comprising a plurality of troughs (91), at the bottom of which at least one hole (92) is formed providing a flow of the oils into the receiving tank or pit (1) while preventing a supply of oxygen sufficient to allow combustion of the oils to be sustained.
